# EUROPÄISCHE PATENTANMELDUNG

(11) **EP 2 042 014 A2**
(43) Veröffentlichungstag der Anmeldung: **01.04.2009**
(21) Anmeldenummer: 08016597.0
(22) Anmeldetag: 20.09.2008
(51) Int. Cl.: A01C 9/00, A01C 5/06

(54) **Legemaschine für Kartoffeln**

(30) Priorität: 25.09.2007 DE 102007045857
(71) Anmelder: Grimme Landmaschinenfabrik GmbH & Co. KG, 49401 Damme (DE)
(72) Erfinder: Kalverkamp, Klemens, D-49401 Damme (DE)
(74) Vertreter: Pott, Ulrich

(57) **Zusammenfassung**

Eine Legemaschine für Kartoffeln weist einen insbesondere von einem Zugfahrzeug im Bereich einer Anhängevorrichtung (2) erfassbaren und über bodenseitige Laufräder (3) abstützbaren Maschinenrahmen (4) auf. An diesem ist für einen zumindest einreihigen Legevorgang eine einen oberen Vorratsbehälter (5) für Knollen (6) aufweisende Vereinzelungsvorrichtung (7) gehalten. Unterhalb dieser sind ein im Ackerboden (B) eine Aufnahmefurche für die vereinzelten Knollen (6) erzeugender Furchenzieher (9) und zumindest ein Ackerboden (B) auf eingelegte Knollen (6) häufelndes Zudeckelement (11) vorgesehen. Erfindungsgemäß ist im Bereich des Furchenziehers (9) ein zumindest an der Oberseite des Ackerbodens (B) befindliche Pflanzenfasern, Kartoffelkraut o. dgl. Restmaterial (R) erfassendes Vorlaufgerät (10) vorgesehen.

## Beschreibung

Die Erfindung betrifft eine Legemaschine für Kartoffeln gemäß dem Oberbegriff des Anspruchs 1.

Bei bekannten Kartoffellegemaschinen dieser Art (DE 19 31 369, DE 26 15 285, G 94 01 110.9) ist unterhalb eines Saatgut-Knollen enthaltenden Vorratsbehälters am Maschinenrahmen zumindest ein Furchenzieher vorgesehen, der mittels eines zusätzlichen Tastrades (DE 26 15 285) entsprechend der Bodenkontur geführt werden kann. Eine ähnliche Konstruktion ist bei einer vom Anmelder hergestellten Kartoffellegemaschine vom Typ GLK 34 K (Deutsche Landwirtschaftsgesellschaft, 1999, DLG-Prüfungsbericht 4824) gezeigt. Bei einer Anwendung dieser Systeme auf weitgehend unbearbeiteten sowie Verunreinigungen, fasrige Pflanzenreste o. dgl. Restmaterialien aufweisenden Ackerböden sind die Konstruktionsteile im Bereich der Furchenzieher störanfällig, da anhaftende Restmaterialien den Verlegevorgang beeinflussen können und deshalb nachteilige Arbeitsunterbrechungen durch Reinigungsphasen erforderlich werden. In DE 10 2005 020 563 A1 ist eine Kartoffellegemaschine gezeigt, bei der eine jeweilige Furche erzeugende Scheibenschare auch Pflanzenreste zerschneiden sollen. Zwischen den beiden Scheiben verbleibt jedoch ein Erdsteg, zu dessen Beseitigung ein zusätzlicher Kammbrecher vorgesehen ist. Bekannt sind auch landwirtschaftliche Sämaschinen (DE 198 37 272 A1), wobei Reihenräumer mit in geringen Arbeitstiefen wirkenden Furchenöffnern als jeweilige Säeinheiten zusammenwirken, mit denen bei Kartoffellege-Baugruppen erforderliche Eingriffs- und Belastungsfunktionen schon prinzipiell nicht erfüllbar sind.

Die Erfindung befasst sich mit dem Problem, eine Legemaschine für Kartoffeln zu schaffen, die in Furchen mit großer Schnitttiefe eine optimale Furchenformung für das Einlegen von Kartoffeln ermöglicht, dabei mit erweitertem Benutzungsumfang auch auf mit fasrigen Restpflanzen versetzten Ackerböden einsetzbar ist und eine geringe Störanfälligkeit aufweist.

Die Erfindung löst diese Aufgabe mit einer Legemaschine für Kartoffeln mit den Merkmalen des Anspruchs 1. Hinsichtlich weiterer Ausgestaltungen wird auf die Ansprüche 2 bis 22 verwiesen.

Die erfindungsgemäße Legemaschine für Kartoffeln ist im Bereich der bodenseitigen Form- und Ausbringteile als eine konstruktiv erweiterte Baueinheit ausgeführt, die im Nahbereich des Furchenziehers mit einem vor diesem den Ackerboden bzw. Restmaterialien erfassenden Vorlaufgerät versehen ist, das bisher für das Legen von Kartoffeln entbehrlich schien. Mit diesem Vorlaufgerät können die auf dem Ackerboden aufliegenden oder vor dem Furchenzieher in unterschiedlichen bodenseitigen Tiefen befindlichen Restmaterialien - die insbesondere nach einem Anbau von als Zwischenfrucht vorgesehenem Raps o. dgl. Halmpflanzen unverrottet vorhanden sind - erfasst und vom Furchenzieher sowie diesem nachgeordneten Bauteilen fern gehalten werden.

Das Vorlaufgerät ist dazu in zweckmäßiger Ausführung als eine Schneidvorrichtung ausgebildet, mit der zumindest eine Teilung von auf Kartoffeldämmen liegenden, insbesondere langfasrigen Restmaterialien möglich ist. Durch diesen Schneidvorgang wird erreicht, dass beim nachfolgenden Furchenziehen nur Faserteile geringer Länge an den den Boden zur Furchenbildung erfassenden Formelementen anliegen, an diese abgeleitet werden und damit die Funktionsfähigkeit des Furchenziehers langzeitig unbeeinflusst ist.

Das Vorlaufgerät kann zusätzlich zu der einen schneidenden Funktion auch mehrere parallel und/oder hintereinander liegende Führungs- und/oder Schneidelemente aufweisen. Durch entsprechende Dimensionierung des Schneidelementes, insbesondere in Form einer Schneidscheibe, kann auch ein bodenseitiger Schneidspalt erzeugt werden, so dass in tieferen Lagen des Ackerbodens befindliches Restmaterial geteilt wird. Gleichzeitig wirkt der erzeugte Schneidspalt nach Art einer "vorlaufenden Spur", mit der die Furche optimal vorgegeben und grobes Restmaterial aus dieser ferngehalten wird.

Ebenso ist denkbar, mit dem Vorlaufgerät eine zumindest seitliche Verlagerung der geteilten Restmaterialien durchzuführen, so dass die als Keilschar nachgeordneten Plattenteile des Furchenziehers den Ackerboden optimal aufformen. Bei einer dem Legevorgang nachfolgenden Dammformung erfolgt weitgehend unbeeinflusst von fasrigen Restmaterialien sowohl eine Positionierung der Knolle in der Furche als auch eine wuchsoptimale Abdeckung des Saatgutes.

Weitere Einzelheiten und vorteilhafte Ausgestaltungen der Erfindung ergeben sich aus der nachfolgenden Beschreibung, in der zwei Ausführungsbeispiele der Legemaschine mit erfindungsgemäßem Vorlaufgerät veranschaulicht sind. In der Zeichnung zeigen:
- Fig. 1: eine schematische Seitenansicht einer Kartoffellegemaschine gemäß dem Stand der Technik,
- Fig. 2: eine erste Ausführung der Legemaschine mit einer ersten Ausführung eines Vorlaufgerätes im Nahbereich des Furchenziehers,
- Fig. 3: eine Perspektivdarstellung der Legemaschine gemäß Fig. 1,
- Fig. 4: eine vergrößerte Ausschnittsdarstellung im Bereich des in den Furchenzieher integrierten Vorlaufgerätes,
- Fig. 5: eine Draufsicht der einreihigen Legemaschine gemäß Fig. 2,
- Fig. 6: eine Draufsicht ähnlich Fig. 5 mit einer mehrreihigen Ausführung der Legemaschine, und
- Fig. 7: eine Seitenansicht ähnlich Fig. 2 mit einer zweiten Ausführung des Vorlaufgerätes mit einem Antrieb.

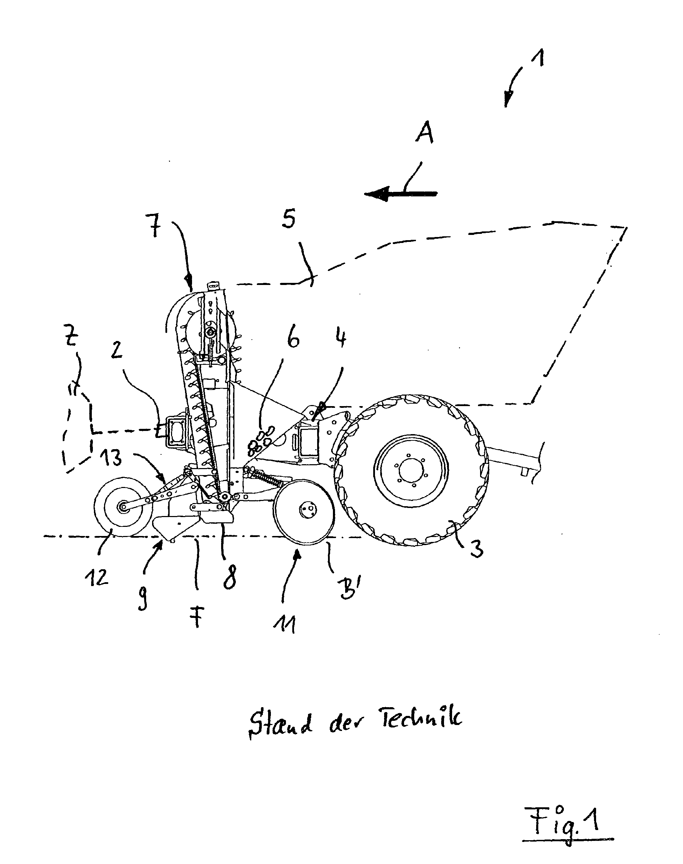

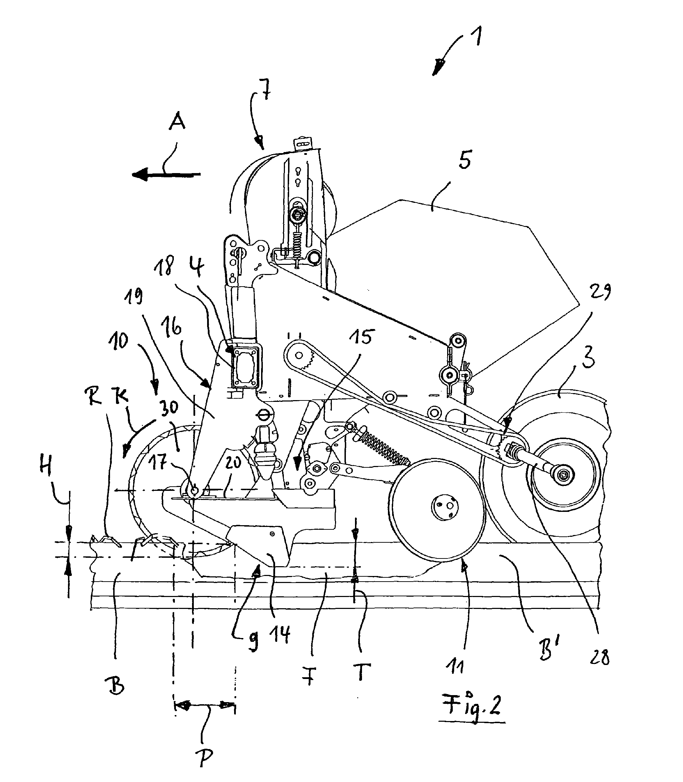

In Fig. 1 ist eine insgesamt mit 1 bezeichnete Legemaschine für Kartoffeln o. dgl. Saatgut dargestellt, wobei diese Legemaschine im Bereich einer Anhängevorrichtung 2 von einem nicht näher dargestellten Zugfahrzeug Z erfassbar und in einer Arbeitsrichtung A unter gleichzeitiger Abstützung auf Laufrädern 3 verlagerbar ist. An einem Maschinenrahmen 4 ist für einen zumindest einreihigen Legevorgang eine einen oberen Vorratsbehälter 5 für Knollen 6 o. dgl. Pflanzgut aufweisende Vereinzelungsvorrichtung 7 gehalten. Im Bereich dieser Vereinzelungsvorrichtung 7 ist nahe einem unteren Auslass 8 ein in Arbeitsrichtung A wirksamer Furchenzieher 9 vorgesehen. In die mittels des Furchenziehers 9 erzeugte Furche F werden die aus der Vereinzelungsvorrichtung 7 ausgeförderten Knollen 6 eingelegt und danach wird mittels zumindest eines Zudeckelementes 11 Ackerboden (bei B') wieder auf die verlegten Knollen 6 aufgehäufelt. Bei dieser bekannten Ausführung der Legemaschine 1 ist über Verbindungsteile 13 am Maschinenrahmen 4 ein Tastrad 12 gehalten, mit dem die Furchentiefe T (Fig. 2) an die jeweiligen Bodenverhältnisse und/oder vorgebbaren Verlegebedingungen anpassbar ist.

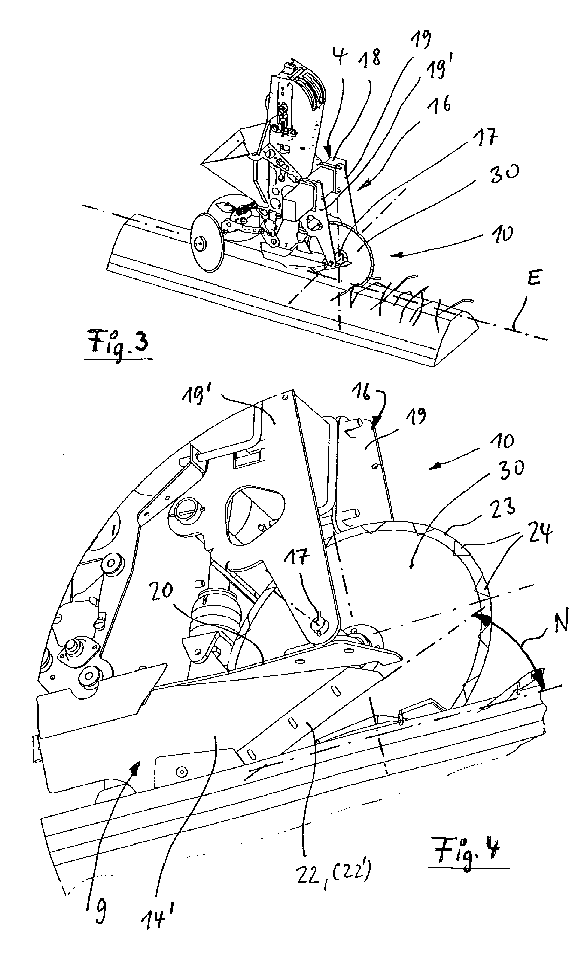

Die erfindungsgemäß verbesserte Ausführung der Legemaschine 1 (Fig. 2) ist so konzipiert, dass im Bereich des Furchenziehers 9 ein funktionales Vorlaufgerät 10 vorgesehen ist, mit dem zumindest an der Oberseite des Ackerbodens B befindliche Pflanzenfasern, Kartoffelkraut o. dgl. Restmaterialien R erfassbar sind, so dass diese Restmaterialien R die Schneid- und Formwirkung des nachgeordneten Furchenziehers 9 nicht beeinflussen. Die Seitenansicht gemäß Fig. 2 verdeutlicht durch eine teilweise Schnittdarstellung die Wirkung des Vorlaufgerätes 10, wobei dieses eine zumindest teilweise (Höhe H) in den Ackerboden B eingreifende Wirkebene E (Fig. 3) vorgibt.

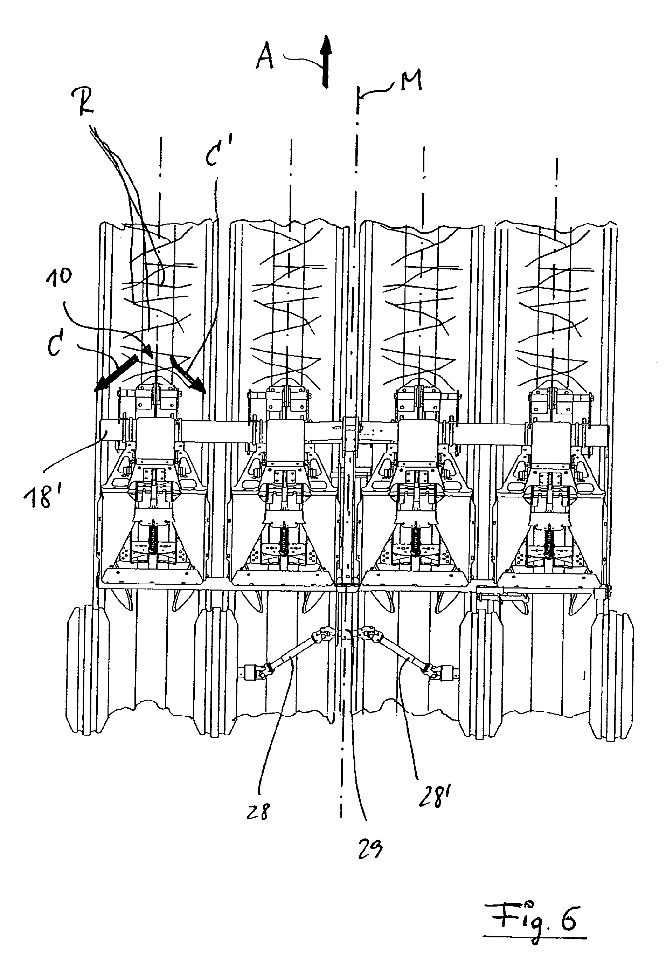

Weitere denkbare Ausführungsformen des Vorlaufgerätes 10 können in weitgehend variabler Konstruktion so angeordnet sein, dass in jedem Fall das vor dem Furchenzieher 9 befindliche Restmaterial R abgeleitet wird (Pfeil C, C', Fig. 6) und damit eine Beeinflussung des Verlegevorganges bzw. des positionsgenauen Einbringens der Knollen 6 im mittleren Bereich D der Furche F bzw. des als Damm geformten Bodens B vermieden werden kann. Insbesondere ist vorgesehen, dass mit dem Vorlaufgerät 10 das bodenseitige Restmaterial R auch zerkleinert werden kann.

Dazu ist das Vorlaufgerät 10 in vorteilhafter Ausführung mit zumindest einem als Schneidscheibe 30 ausgebildeten Schneidelement versehen. In einer nicht dargestellten Ausführung ist denkbar, dass das Vorlaufgerät 10 auch mehrere der Schneidelemente aufweist.

Die Zusammenschau von Fig. 2 bis 4 verdeutlicht die Wirkungsweise der Schneidscheibe 30, die in zweckmäßiger Ausführung weitgehend synchron mit dem Furchenzieher 9 so gesteuert wird, dass in der Wirkebene E das Fasermaterial R geteilt wird und dabei in dieser Schneidphase auch Restmaterial bis in eine einstellbare Bodentiefe H erfassbar ist. Dabei wird in Arbeitsrichtung A bzw. in der Wirkebene E eine Schneidspur erzeugt, in der der nachgeordnete Furchenzieher 9 verläuft. Bei einer Ausführung des Vorlaufgerätes 10 mit mehreren Schneidscheiben (nicht dargestellt) können diese in der Schneidspur hintereinander und/oder höhenversetzt zueinander verlaufen. Ebenso ist eine Nebeneinanderanordnung von mehreren der Schneidelemente im Bereich der Vereinzelungsvorrichtung 7 denkbar (nicht dargestellt).

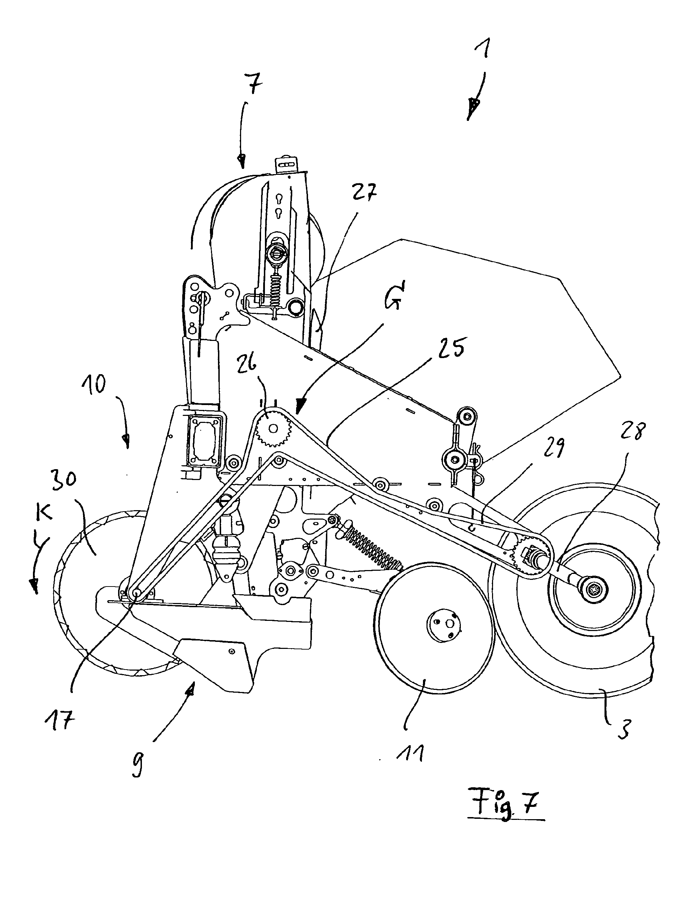

Das in Fig. 2 bis 6 ersichtliche Verlegesystem mit Vorlaufgerät 10 zeigt eine Ausführung, bei der die Schneidscheibe 30 in Arbeitsrichtung A mitrollbar (Drehrichtung gemäß Pfeil K) gehalten ist. In einer zweiten Ausführung der Legemaschine 1 gemäß Fig. 7 ist vorgesehen, dass diese eine antreibbare Ausführung aufweist und die Schneidscheibe 30 mit einem Antriebsorgan G verbunden wird.

Für eine kompakte Gestaltung der gesamten Furchenzieher-Baugruppe ist vorgesehen, dass die das wesentliche funktionale Element des Vorlaufgerätes 10 bildende Schneidscheibe 30 als ein in den Furchenzieher 9 integriertes Bauteil ausgebildet wird. Dabei kann das Schneidelement unmittelbar zwischen zwei an sich bekannten Keilscharen 14, 14' des Furchenziehers 9 gehalten sein. Dabei wird zu jeweiligen den Boden B formenden Bereichen der Keilschare 14, 14' ein Abstand P definiert, so dass zwingend dem Furchenzieher 9 vorlaufend das Restmaterial R getrennt werden kann (Fig. 2).

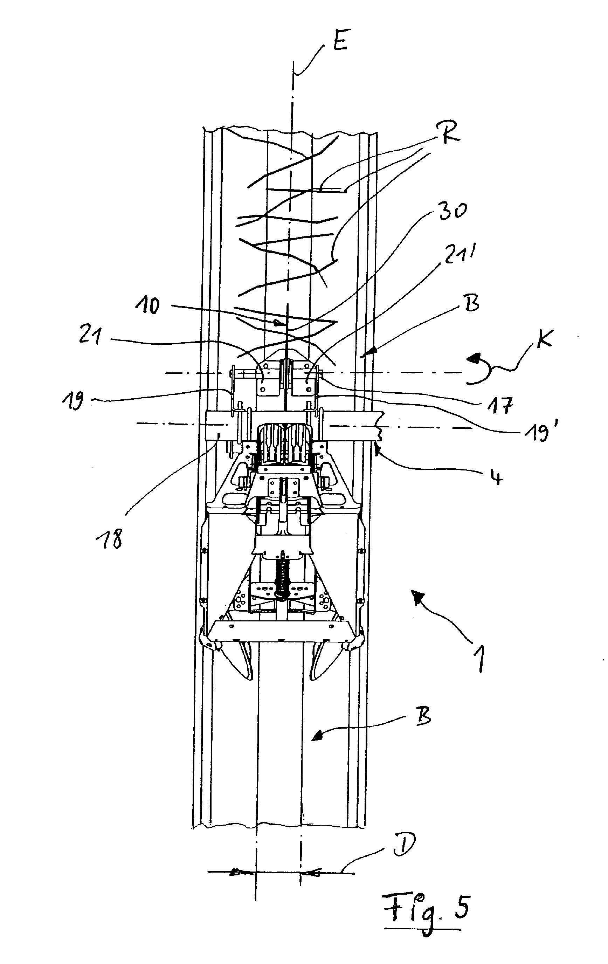

Im Bereich des mit dem Maschinenrahmen 4 mittels eines hinteren Trägers 15 verbundene Furchenzieher 9 ist zur optimalen Abstützung der Schneidscheibe 30 zusätzlich eine zumindest diese erfassende Tragbaugruppe 16 vorgesehen. Diese ist so ausgebildet, dass die zwischen die beiden Keilschare 14, 14' eingreifende Schneidscheibe 30 im Bereich der vorderen Tragbaugruppe 16 an einer Querachse 17 drehbar gelagert ist (Pfeil K, Fig. 5).

Die Perspektivdarstellungen gemäß Fig. 3 und 4 verdeutlichen, dass die Tragbaugruppe 16 zwei an einem Querträger 18 des Maschinenrahmens 4 festlegbare Halteschenkel 19, 19' aufweist, an deren freien Ende die die Schneidscheibe 30 durchgreifende Querachse 17 gehalten ist. Im Bereich der Tragbaugruppe 16 ist oberhalb der beiden Keilschare 14, 14' eine diese horizontal übergreifende und einen von der Schneidscheibe 30 durchgriffenen Schlitz aufweisende Deckplatte 20 vorgesehen. Oberhalb dieser verläuft die Querachse 17, so dass mittels diese übergreifender Haltelaschen 21, 21' (Fig. 5) eine optimale Lagerung erreicht ist.

Die Perspektivdarstellung gemäß Fig. 4 verdeutlicht den Aufbau der sich "bugförmig" spreizenden Keilschare 14, 14', wobei an diesen jeweils eine sich mit einer spitzwinkligen Neigung N im wesentlichen bis in Höhe der Querachse 17 erstreckende Abstreiferplatten 22, 22' vorgesehen ist. Diese Abstreiferplatten 22, 22' sind so ausgeführt, dass seitlich an der Schneidscheibe 30 eine Reinigungswirkung erzielbar ist und anhaftende Bodenteile und/oder Restmaterialien R von der Schneidscheibe 30 entfernt werden.

Die Schneidscheibe 30 ist im Bereich ihrer umfangsseitigen Schneidkontur 23 an die für den vorbeschriebenen Schneidvorgang vorgesehenen Einsatzbedingungen optimal angepasst. Vorteilhaft sind in die Schneidkontur 23 noch zusätzliche Schneidprofile 24 so eingearbeitet, dass die Pflanzenreste R sicher erfassbar und trennbar sind.

In Fig. 7 ist die zweite Ausführung der Legemaschine 1 mit der Antriebsverbindung G im Bereich der Schneidscheibe 30 dargestellt, wobei als Antriebsverbindung ein an der Querachse 17 angreifender Riemen- bzw. Kettentrieb 25 vorgesehen ist. In der dargestellten Ausführung wird dieser Antrieb 25 mittels eines Antriebsritzels 26 in das Antriebskonzept der Verlegevorrichtung 7 bzw. deren Förderelemente 27 für die Knollen 6 integriert. Damit kann die Schneidscheibe 30 zusätzlich zu der bei der Bewegung A durch den Auflagekontakt S wirksamen Schneidkraft eine radiale Schneidkomponente in Drehrichtung K überlagert werden, so dass auch widerstandsfähiges Restmaterial, Gestrüpp o. dgl. sicher durchtrennt wird.

Ebenso ist denkbar, dass die Schneidscheibe 30 bzw. deren Querachse 17 mittels eines direkten Antriebes drehbar ist. Dazu kann ein Hydromotor o. dgl. Antriebsorgan (nicht dargestellt) direkt im Bereich der Tragbaugruppe 16 angeordnet werden.

In einer erweiterten Ausführungsform der vorbeschriebenen einreihigen Legemaschine 1 gemäß Fig. 1 bzw. Fig. 7 ist in Fig. 6 ein Konzept dargestellt, bei dem mehrere der vorbeschriebenen Baugruppen für eine hier in Draufsicht gezeigte 4-reihige Verlegung vorgesehen sind. Mehrere der Verlege-Baugruppen sind hier parallel nebeneinander angeordnet, wobei ein entsprechend spiegelsymmetrisch zu einer Mittellängsebene M aufgebautes Maschinenkonzept verwirklicht wird. Der Maschinenrahmen 4 ist dabei mit einem verlängerten Querträger 18' versehen, an dem mittig jeweilige Antriebsbaugruppen 28, 28' in ein Getriebe 29 eingreifen (ähnlich Fig. 2, rechte Seite).

## Patentansprüche

1. Legemaschine für Kartoffeln, mit einem insbesondere von einem Zugfahrzeug im Bereich einer Anhängevorrichtung (2) erfassbaren und über bodenseitige Laufräder (3) abstützbaren Maschinenrahmen (4), an dem für einen zumindest einreihigen Legevorgang eine einen oberen Vorratsbehälter (5) für Knollen (6) aufweisende Vereinzelungsvorrichtung (7) gehalten ist, wobei unterhalb dieser in Arbeitsrichtung (A) im wesentlichen hintereinander ein im Ackerboden (B) eine Aufnahmefurche für die vereinzelten Knollen (6) erzeugender Furchenzieher (9) und zumindest ein Ackerboden (B) auf eingelegte Knollen (6) häufelndes Zudeckelement (11) vorgesehen sind, **dadurch gekennzeichnet, dass** im Bereich des Furchenziehers (9) ein zumindest an der Oberseite des Ackerbodens (B) befindliche Pflanzenfasern, Kartoffelkraut o. dgl. Restmaterial (R) erfassendes Vorlaufgerät (10) vorgesehen ist.

2. Legemaschine nach Anspruch 1, **dadurch gekennzeichnet, dass** das Vorlaufgerät (10) eine zumindest teilweise (Höhe H) in den Ackerboden (B) eingreifende Wirkebene (E) vorgibt.

3. Legemaschine nach Anspruch 1 oder 2, **dadurch gekennzeichnet, dass** mit dem Vorlaufgerät (10) vor dem Furchenzieher (9) befindliches Restmaterial (R) ableitbar ist.

4. Legemaschine nach einem der Ansprüche 1 bis 3, **dadurch gekennzeichnet, dass** mit dem Vorlaufgerät (10) die bodenseitigen Restmaterialien (R) zerkleinerbar sind.

5. Legemaschine nach einem der Ansprüche 1 bis 4, **dadurch gekennzeichnet, dass** das Vorlaufgerät (10) zumindest ein als Schneidscheibe (30) ausgebildetes Schneidelement aufweist.

6. Legemaschine nach einem der Ansprüche 1 bis 5, **dadurch gekennzeichnet, dass** das Vorlaufgerät (10) mehrere Schneidelemente aufweist.

7. Legemaschine nach einem der Ansprüche 1 bis 6, **dadurch gekennzeichnet, dass** das zumindest eine Schneidelement (30) unter Bildung einer Schneidspur bis in den Ackerboden (B) einführbar ist.

8. Legemaschine nach einem der Ansprüche 1 bis 7, **dadurch gekennzeichnet, dass** in der einen Schneidspur mehrere der Schneidelemente (30) hintereinander und/oder höhenversetzt zueinander verlaufen.

9. Legemaschine nach einem der Ansprüche 1 bis 8, **dadurch gekennzeichnet, dass** die zumindest eine Schneidscheibe (30) des Vorlaufgerätes (10) in Arbeitsrichtung (A) mitrollbar mit dem Maschinenrahmen (4) verbunden ist.

10. Legemaschine nach einem der Ansprüche 1 bis 9, **dadurch gekennzeichnet, dass** die zumindest eine Schneidscheibe (30) einen vom Antrieb der Maschine (1) unabhängigen Zusatzantrieb (G) aufweist.

11. Legemaschine nach einem der Ansprüche 1 bis 10, **dadurch gekennzeichnet, dass** das als Vorlaufgerät (10) wirksame Schneidelement (30) als ein in den Furchenzieher (9) integrierbares Bauteil ausgebildet ist.

12. Legemaschine nach Anspruch 11, **dadurch gekennzeichnet, dass** das Schneidelement (30) zwischen den Keilscharen (14, 14') gehalten ist, derart, dass vor diesen die Restmaterialien (R) trennbar sind.

13. Legemaschine nach Anspruch 11 oder 12, **dadurch gekennzeichnet, dass** der mit dem Maschinenrahmen (4) mittels eines hinteren Trägers (15) verbundene Furchenzieher (9) zusätzlich eine zumindest die Schneidscheibe (30) erfassende Tragbaugruppe (16) aufweist.

14. Legemaschine nach einem der Ansprüche 11 bis 13, **dadurch gekennzeichnet, dass** die zwischen die beiden Keilschare (14, 14') eingreifende Schneidscheibe (30) im Bereich der vorderen Tragbaugruppe (16) an einer Querachse (17) drehbar gehalten ist.

15. Legemaschine nach einem der Ansprüche 11 bis 14, **dadurch gekennzeichnet, dass** die Tragbaugruppe (16) zwei an einem Querträger (18) des Maschinenrahmens (4) festlegbare Halteschenkel (19, 19') aufweist, an deren freien Enden die die Schneidscheibe (30) durchgreifende Querachse (17) gehalten ist.

16. Legemaschine nach einem der Ansprüche 11 bis 15, **dadurch gekennzeichnet, dass** die beiden Keilschare (14, 14') oberhalb einer diese horizontal übergreifenden Deckplatte (20) mit der Tragbaugruppe (16) verbunden sind.

17. Legemaschine nach Anspruch 16, **dadurch gekennzeichnet, dass** an der Tragplatte (20) zwei die Querachse (17) übergreifende Haltelaschen (21, 21') vorgesehen sind.

18. Legemaschine nach einem der Ansprüche 11 bis 17, **dadurch gekennzeichnet, dass** an den beiden sich mit einer spitzwinkligen Neigung (N) im wesentlichen bis in Höhe der Querachse (17) erstreckenden Keilscharen (14, 14') jeweilige Abstreiferplatten (22, 22') vorgesehen und diese seitlich an der Schneidscheibe (30) anlegbar sind.

19. Legemaschine nach einem der Ansprüche 1 bis 18, **dadurch gekennzeichnet, dass** die Schneidscheibe (30) eine umfangsseitige Schneidkontur (23) mit Schneidprofilen (24) aufweist.

20. Legemaschine nach einem der Ansprüche 1 bis 18, **dadurch gekennzeichnet, dass** die Schneidscheibe (30) eine mit dem Antrieb (28, 29) der Legemaschine (1) zusammenwirkende Antriebsverbindung (G) aufweist.

21. Legemaschine nach Anspruch 20, **dadurch gekennzeichnet, dass** die Antriebsverbindung (G) als an der Querachse (17) angreifender Riemen- oder Kettenantrieb (25) ausgebildet ist.

22. Legemaschine nach einem der Ansprüche 1 bis 20, **dadurch gekennzeichnet, dass** an der Schneidscheibe (30) bzw. deren Querachse (17) ein Hydromotor o. dgl. zusätzliches Antriebsorgan vorgesehen ist.
